# EUROPÄISCHE PATENTANMELDUNG

(11) **EP 4 151 289 A1**
(43) Veröffentlichungstag der Anmeldung: **22.03.2023**
(21) Anmeldenummer: 22194062.0
(22) Anmeldetag: 06.09.2022
(51) Int. Cl.: A63B 47/02, F16B 2/18, F16B 7/14

(54) **SAMMELROHR FÜR TENNISBÄLLE**

(30) Priorität: 20.09.2021 DE 102021210430
(71) Anmelder: TIS-Service-GmbH, 71573 Allmersbach im Tal (DE)
(72) Erfinder: Braun, Bernd, 71522 Backnang (DE)
(74) Vertreter: Patentanwälte Ruff, Wilhelm, Beier, Dauster & Partner mbB

(57) **Zusammenfassung**

Die Erfindung betrifft ein Sammelrohr für Tennisbälle mit wenigstens zwei teleskopierbaren Rohrstücken, wobei ein erstes Rohrstück einen Innendurchmesser aufweist, der im Wesentlichen einem Außendurchmesser des zweiten Rohrstücks entspricht, so dass die beiden Rohrstücke ineinander eingesteckt und relativ zueinander verschoben werden können, wobei ein Spannring vorgesehen ist, der im Bereich eines Endes des ersten Rohrstücks angeordnet ist und das erste Rohrstück umgibt, wobei der Spannring eine Schnalle aufweist, die einerseits in einem ersten Abschnitt des Spannrings schwenkbar angelenkt ist und andererseits mit einem Spannbügel verbunden ist, der an einem zweiten Abschnitt des Spannrings angreift, so dass der Spannring in einer ersten Stellung der Schnalle einen ersten Innendurchmesser und in einer zweiten Stellung der Schnalle einen zweiten Innendurchmesser aufweist, der kleiner ist als der erste Innendurchmesser, und dass der Spannring so ausgebildet und auf dem ersten Rohrstück angeordnet ist, dass in der ersten Stellung der Schnalle das zweite Rohrstück in dem ersten Rohrstück verschiebbar ist und in der zweiten Stellung der Schnalle das zweite Rohrstück in dem ersten Rohrstück festgeklemmt ist.

## Beschreibung

Die Erfindung betrifft ein Sammelrohr für Tennisbälle mit wenigstens zwei teleskopierbaren Rohrstücken, wobei ein erstes Rohrstück einen Innendurchmesser aufweist, der im Wesentlichen einem Außendurchmesser des zweiten Rohrstücks entspricht, so dass die beiden Rohrstücke ineinander eingesteckt und relativ zueinander verschoben werden können.

Aus der deutschen Offenlegungsschrift DE 10 2017 218 724 A1 ist ein teleskopierbares Sammelrohr für Tennisbälle bekannt. Das Sammelrohr besteht aus drei teleskopierbaren Rohrstücken. In einer vollständig ausgezogenen Arbeitsstellung greifen Rasthebel an einem jeweils äußeren Rohr durch eine Ausnehmung des äußeren Rohrs hindurch und in eine Ausnehmung des jeweils inneren Rohrs hinein. Mittels der Rasthebel kann die vollständig ausgezogene Arbeitsstellung dadurch arretiert werden und beim Aufsammeln von Bällen kann das vollständig ausgezogene Sammelrohr auf die Bälle gedrückt werden, ohne dass sich die drei Rohrstücke ineinanderschieben. Zum Ineinanderschieben der drei Rohrstücke in eine vollständig zusammengeschobene Endstellung müssen jeweils die Rasthebel gedrückt und die Verriegelungen zwischen den jeweiligen zwei Rohrstücken damit gelöst werden.

Mit der Erfindung soll ein Sammelrohr für Tennisbälle verbessert werden.

Erfindungsgemäß ist hierzu ein Sammelrohr für Tennisbälle mit den Merkmalen von Anspruch 1 vorgesehen.

Ein erfindungsgemäßes Sammelrohr für Tennisbälle weist wenigstens zwei teleskopierbare Rohrstücke auf, wobei ein erstes Rohrstück einen Innendurchmesser aufweist, der im Wesentlichen einem Außendurchmesser des zweiten Rohrstücks entspricht, so dass die beiden Rohrstücke ineinander eingesteckt und relativ zueinander verschoben werden können. Es ist ein Spannring vorgesehen, der im Bereich eines Endes des ersten Rohrstücks angeordnet ist und das erste Rohrstück umgibt, wobei der Spannring eine Schnalle aufweist, die einerseits in einem ersten Abschnitt des Spannrings schwenkbar angelenkt ist und andererseits mit einem Spannbügel verbunden ist, der an einem zweiten Abschnitt des Spannrings angreift, so dass der Spannring in einer ersten Stellung der Schnalle einen ersten Innendurchmesser und in einer zweiten Stellung der Schnalle einen zweiten Innendurchmesser aufweist, der kleiner ist als der erste Innendurchmesser, und dass der Spannring so ausgebildet und auf dem ersten Rohrstück angeordnet ist, dass in der ersten Stellung der Schnalle das zweite Rohrstück in dem ersten Rohrstück verschiebbar ist und in der zweiten Stellung der Schnalle das zweite Rohrstück in dem ersten Rohrstück festgeklemmt ist.

Mittels eines Spannrings zum Verklemmen zweier Rohrstücke lässt sich eine äußerst zuverlässige und stabile Klemmvorrichtung für ein Sammelrohr für Tennisbälle bereitstellen. Die Rohrstücke des Sammelrohrs müssen geringfügig elastisch sein, so dass sich durch das Anspannen des Spannrings der Innendurchmesser des ersten Rohrstücks so weit verringert, dass das in das erste Rohrstück ein Stück weit eingeschobene zweite Rohrstück im ersten Rohrstück festgeklemmt wird. Durch eine Schnalle und einen Spannbügel am Spannring lassen sich sehr hohe Kräfte aufbringen. Die Schnalle und der Spannbügel sind gelenkig miteinander verbunden und werden zwischen einer offenen Stellung und einer geschlossenen Stellung über einen Totpunkt hinwegbewegt, so dass die Schnalle selbsttätig in der verriegelten Stellung bleibt, in der das zweite Rohrstück in dem ersten Rohrstück festgeklemmt ist. Vergleichbare Schnallenkonstruktionen sind beispielsweise von Skistiefeln bekannt. Überraschenderweise lässt sich mittels eines Spannrings, der mit einer Schnalle und einem Spannbügel versehen ist, eine äußerst zuverlässige und stabile Festklemmung des zweiten Rohrstücks in dem ersten Rohrstück erreichen. Der Spannring kann dabei konstruktiv sehr einfach und extrem zuverlässig ausgeführt werden. Beispielsweise bestehen die Rohrstücke aus transparentem Kunststoff mit geringer Wandstärke, beispielsweise lediglich zwischen 1 mm und 2 mm Wandstärke. Auf diese Weise können die Rohrstücke mittels der Spannringe problemlos ineinander festgeklemmt werden und es kann auf einen Blick erfasst werden, ob und wie viele Bälle sich in dem Sammelrohr befinden. Durch die Teleskopierbarkeit der Rohrstücke lässt sich das Sammelrohr sehr klein zusammenschieben und benötigt dadurch, beispielsweise für den Transport, nur wenig Platz. Das Sammelrohr ist für Tennisbälle mit einem Durchmesser zwischen 65 mm und 75 mm geeignet. Dadurch können sowohl sogenannte Kinderbälle mit großem Durchmesser und normale Spielbälle gesammelt werden. Ein Tennistrainer benötigt dadurch für das Trainieren unterschiedlicher Altersklassen lediglich ein einziges Sammelrohr.

In Weiterbildung der Erfindung ist der Spannring als offener Ring ausgebildet und die Schnalle ist im Bereich eines ersten Endes des Spannrings schwenkbar angelenkt und der Spannbügel greift im Bereich eines zweiten Endes des Spannrings an. Durch einfaches Umlegen der Schnalle, sofern der Spannbügel im Bereich des zweiten Endes des Spannrings angreift, kann dadurch ein Innendurchmesser des Spannrings verkleinert werden bzw. kann mittels des Spannrings eine Vorspannkraft auf das erste Rohrstück ausgeübt werden, wobei diese Vorspannkraft dann letztendlich zu einem Festklemmen des zweiten Rohrstücks in dem ersten Rohrstück führt.

In Weiterbildung der Erfindung greift der Spannbügel in eine Ausnehmung oder in einem Vorsprung am Spannring ein.

Auf diese Weise kann eine sehr sichere und doch sehr einfach lösbare Befestigung des Spannbügels am Spannring bereitgestellt werden. In einer schlitzartigen Ausnehmung kann der Spannbügel sicher verankert werden und ist im entspannten Zustand leicht lösbar. Solche schlitzartigen Ausnehmungen sind, wie die Schnallen selbst und der Spannbügel, von Skischuhen her bekannt.

In Weiterbildung der Erfindung weist der Spannring wenigstens zwei in Umfangsrichtung voneinander beabstandete Ausnehmungen oder Vorsprünge zum Eingreifen des Spannbügels auf.

Ein Innendurchmesser des Spannrings kann dadurch in zwei Stufen verändert werden. Bei dem erfindungsgemäßen Sammelrohr werden beispielsweise drei ineinander teleskopierbare Rohrstücke verwendet. Die drei Rohrstücke müssen infolgedessen jeweils aufeinander abgestimmte Außendurchmesser und Innendurchmesser haben, so dass sie ineinandergleiten und teleskopiert werden können. Indem der Spannring wenigstens zwei in Umfangsrichtung voneinander beabstandete Ausnehmungen zum Eingreifen des Spannbügels aufweist, können identische Spannringe zum Festklemmen des zweiten Rohrstücks in dem ersten Rohrstück und zum Festklemmen des dritten Rohrstücks in dem zweiten Rohrstück verwendet werden. Diese Verwendung von Gleichteilen senkt die Kosten erheblich.

In Weiterbildung der Erfindung ist der Spannring mit einem Ende des ersten Rohrstücks verbunden. Dadurch kann mittels des Spannrings das Ende des ersten Rohrstücks gespannt werden, so dass sich dessen Innendurchmesser verringert und das zweite Rohrstück festgeklemmt wird.

In Weiterbildung der Erfindung ist der Spannring mit einem Abschnitt seines Innenumfangs mit einem Abschnitt des Außenumfangs des ersten Rohrstücks verklebt.

Durch Verkleben kann eine sehr einfache und zuverlässige Verbindung des Spannrings mit dem Ende des ersten Rohrstücks erzielt werden. Beispielsweise ist der Spannring über 20 % bis 40 %, insbesondere 30 %, der Länge seines Innenumfangs mit dem Außenumfang des ersten Rohrstücks verklebt und über die übrige Länge seines Innenumfangs liegt der Spannring nur an dem Außenumfang des ersten Rohrstücks an. Eine Verringerung des Innendurchmessers des Spannrings kann dadurch zu einem sicheren Festklemmen des zweiten Rohrstücks in dem ersten Rohrstück führen, da der Spannring mit 80 % bis 60 %, insbesondere 70 %, seines Innenumfangs auf dem Außenumfang des ersten Rohrstücks gleiten kann. Alternativ zu einer Verklebung kann der Spannring auch mit dem Außenumfang des Rohrstücks verschweißt sein, analog zur Verklebung über 20 % bis 40 % seines Innenumfangs.

In Weiterbildung der Erfindung weist der Spannring am Innenumfang einen Absatz auf, an dem eine Stirnseite des ersten Rohrstücks anliegt. Auf diese Weise kann das erfindungsgemäße Sammelrohr in sehr einfacher Weise montiert werden. Der Spannring muss lediglich auf das Ende des ersten Rohrstücks aufgeschoben werden, bis die Stirnseite des ersten Rohrstücks an dem Absatz anliegt.

In Weiterbildung der Erfindung ist ein drittes Rohrstück vorgesehen, wobei das zweite Rohrstück einen Innendurchmesser aufweist, der im Wesentlichen einem Außendurchmesser des dritten Rohrstücks entspricht, so dass das zweite Rohrstück und das dritte Rohrstück ineinander eingesteckt und relativ zueinander verschoben werden können, wobei ein zweiter Spannring vorgesehen ist, der im Bereich eines Endes des zweiten Rohrstücks angeordnet ist und das zweite Rohrstück umgibt, wobei der zweite Spannring eine Schnalle aufweist, die einerseits in einem ersten Abschnitt des Spannrings schwenkbar angelenkt ist und andererseits mit einem Spannbügel verbunden ist, der an einem zweiten Abschnitt des Spannrings angreift, so dass der Spannring in einer ersten Stellung der Schnalle einen ersten Innendurchmesser und in einer zweiten Stellung der Schnalle einen zweiten Innendurchmesser aufweist, der kleiner ist als der erste Innendurchmesser, und dass der Spannring so ausgebildet und auf dem zweiten Rohrstück angeordnet ist, dass in der ersten Stellung der Schnalle das dritte Rohrstück in dem zweiten Rohrstück verschiebbar ist und in der zweiten Stellung der Schnalle das dritte Rohrstück in dem zweiten Rohrstück festgeklemmt ist.

Auf diese Weise kann auch das dritte Rohrstück in dem zweiten Rohrstück mittels eines Spannrings festgeklemmt werden oder das Sammelrohr kann in eine zusammengeschobene Transportstellung gebracht werden, in der es gegenüber der vollständig ausgezogenen Endstellung nur noch etwas mehr als ein Drittel der Länge der ausgezogenen Endstellung aufweist.

In Weiterbildung der Erfindung sind die beiden Spannringe identisch ausgebildet, wobei die Schnalle jeweils im Bereich eines ersten Endes des Spannrings schwenkbar angelenkt ist, wobei der Spannbügel jeweils im Bereich eines zweiten Endes des Spannrings angreift, wobei der Spannbügel in eine Ausnehmung oder an einem Vorsprung am Spannring eingreift, wobei der Spannring wenigstens zwei in Umfangsrichtung voneinander beabstandete Ausnehmungen oder Vorsprünge zum Eingreifen des Spannbügels aufweist, wobei der Spannbügel zum Klemmen des zweiten Rohrstücks in dem ersten Rohrstück in eine erste Ausnehmung oder einem ersten Vorsprung eingreift und wobei der Spannbügel zum Klemmen des dritten Rohrstücks in dem zweiten Rohrstück in eine zweite Ausnehmung oder an einem zweiten Vorsprung eingreift.

In Weiterbildung der Erfindung sind die Rohrstücke als durchgehend glatte, zylindrische Rohrstücke mit senkrecht zu ihrer Mittellängsachse angeordneten Stirnflächen ausgebildet.

Die einzelnen Rohrstücke können dadurch durch einfaches, senkrechtes Ablängen hergestellt werden. Insbesondere müssen die Rohrstücke nicht weiter bearbeitet werden. Dadurch kann für die Rohrstücke dünnwandiges Material verwendet werden und die Herstellungskosten des Sammelrohrs können klein gehalten werden.

In Weiterbildung der Erfindung ist an einem Ende eines der Rohrstücke eine Rückhaltevorrichtung für Tennisbälle angeordnet, die mehrere, insbesondere drei, in Richtung auf eine Mittellängsachse des Rohrstücks vorragende federnde Vorsprünge aufweist.

Über diese federnden Vorsprünge wird ein Tennisball hinweggedrückt. Die Vorsprünge federn dabei von einem Boden, auf dem der Tennisball liegt, weg in den Innenraum des untersten Rohrstücks hinein, bis der Tennisball die federnden Vorsprünge passiert hat und diese wieder in ihre Ausgangsstellung zurückfedern. Die Rückhaltevorrichtung und speziell die Vorsprünge sind dabei so ausgebildet, dass Tennisbälle mit einem Durchmesser zwischen 65 mm und 75 mm aufgenommen und dann auch in dem Sammelrohr gehalten werden können.

In Weiterbildung der Erfindung sind die Vorsprünge in Richtung von dem offenen Ende des Rohrstücks weg schräg angeordnet.

Auf diese Weise wird das Einführen eines Tennisballs erleichtert. Eine Innenkante der Vorsprünge, die auf einem gedachten Kreis mit einem kleineren Radius als die Basis der Vorsprünge liegt, kann eine kreisabschnittsförmige konkave Kontur aufweisen. Auch dadurch wird das Wegdrücken der Vorsprünge durch einen Tennisball erleichtert.

In Weiterbildung der Erfindung weist die Rückhaltevorrichtung einen ringförmigen Grundkörper auf, der auf ein Ende des Rohrstücks aufgeschoben ist.

Auf diese Weise lässt sich die Rückhaltevorrichtung in sehr einfacher Weise an einem unbearbeiteten zylindrischen Rohr befestigen. Die Rückhaltevorrichtung kann beispielsweise an dem Ende des Rohrstücks festgeklebt werden. Die federnden Vorsprünge gehen dann von dem ringförmigen Grundkörper aus und erstrecken sich von diesem weg radial nach innen sowie schräg von dem offenen Ende des Rohrstücks weg in Richtung des Innenraums des Rohrstücks.

In Weiterbildung der Erfindung ist an einem Ende eines der Rohrstücke eine Griffvorrichtung vorgesehen, die einen ringförmigen Grundkörper aufweist und auf ein Ende eines Rohrstücks aufgeschoben ist.

Auf diese Weise lässt sich die Griffvorrichtung in sehr einfacher Weise an dem Rohrstück befestigen, beispielsweise mittels Aufschieben und Verkleben. Die Griffvorrichtung kann in sehr einfacher Weise ausgebildet sein, beispielsweise als ein Ring mit mehreren in Umfangsrichtung umlaufenden abgerundeten Nuten. Diese Nuten, beispielsweise drei Nuten, sind dabei auf die Breite eines menschlichen Fingers abgestimmt, so dass das Sammelrohr an der Griffvorrichtung leicht und ohne Mühe ergriffen, gehalten und geführt werden kann.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine abschnittsweise Seitenansicht eines erfindungsgemäßen Sammelrohrs,
- Fig. 2: eine Draufsicht auf einen Spannring des Sammelrohrs der Fig. 1,
- Fig. 3: eine Ansicht auf den Spannring der Fig. 2 von schräg oben,
- Fig. 4: eine Ansicht von schräg oben auf den Griffabschnitt des Sammelrohrs der Fig. 1 und
- Fig. 5: eine Ansicht der Rückhaltevorrichtung des Sammelrohrs der Fig. 1 von schräg unten.

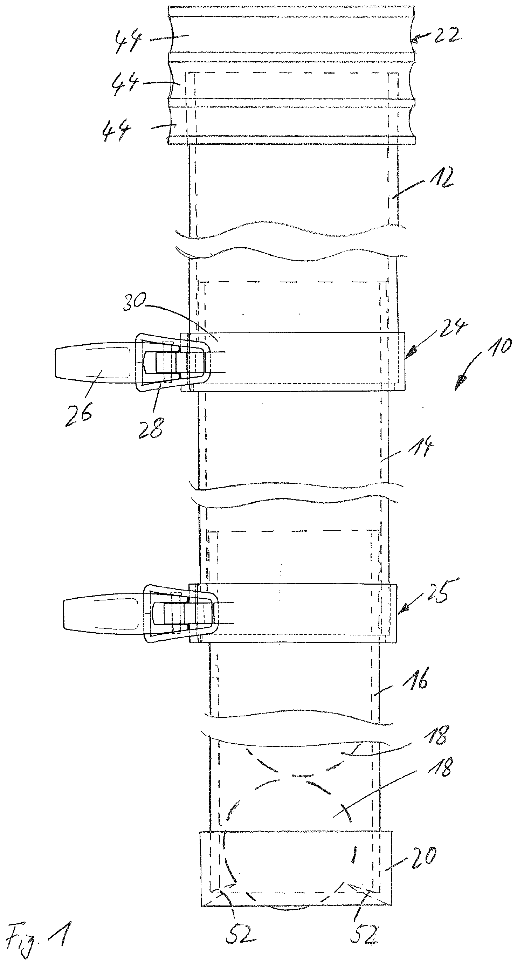

Fig. 1 zeigt ein Sammelrohr für Tennisbälle 10 gemäß der Erfindung. Das Sammelrohr 10 weist ein erstes Rohrstück 12, ein zweites Rohrstück 14 und ein drittes Rohrstück 16 auf, die ineinander teleskopierbar sind. Das erste Rohrstück 12 weist den größten Außendurchmesser auf und einen Innendurchmesser, der dem Außendurchmesser des zweiten Rohrstücks 14 entspricht. Das zweite Rohrstück 14 weist einen Innendurchmesser auf, der dem Außendurchmesser des dritten Rohrstücks 16 entspricht. Die Rohrstücke 12, 14, 16 können damit ineinander teleskopiert werden und von der in Fig. 1 dargestellten vollständig ausgezogenen Arbeitsstellung in eine zusammengeschobene Transportstellung gebracht werden. Die Rohrstücke 12, 14, 16 können dabei ineinandergleiten und von Hand ohne Zuhilfenahme von Werkzeug ineinander eingeschoben und wieder ausgezogen werden. Um mit dem Sammelrohr 10 Tennisbälle 18 aufnehmen zu können, wird das Sammelrohr 10 mit seiner Rückhaltevorrichtung 20 am in Fig. 1 unteren Ende des dritten Rohrstücks 16 auf einen Tennisball 18 aufgesetzt und dann nach unten, in Richtung auf den Boden, auf dem der Tennisball 18 liegt, gedrückt. Dadurch wird der Tennisball 18 an federnden Vorsprüngen 22 der Rückhaltevorrichtung 20 vorbei in den Innenraum des dritten Rohrstücks 16 gedrückt. Um den Tennisball 18 in den dritten Rohrabschnitt 16 hineinzudrücken, wird an einem Griffabschnitt 22 am in Fig. 1 oberen Ende des Sammelrohrs 10 das gesamte Sammelrohr 10 nach unten, in Richtung auf den Boden gedrückt.

Damit während dieses Sammelvorgangs die Rohrstücke 12, 14, 16 nicht ineinandergeschoben werden, sind diese in der in Fig. 1 dargestellten Stellung festgeklemmt. Die Klemmung der Rohrstücke 12, 14, 16 ineinander wird mittels eines ersten Spannrings 24 und eines zweiten Spannrings 25 bewirkt. Die beiden Spannringe 24, 25 sind identisch ausgebildet.

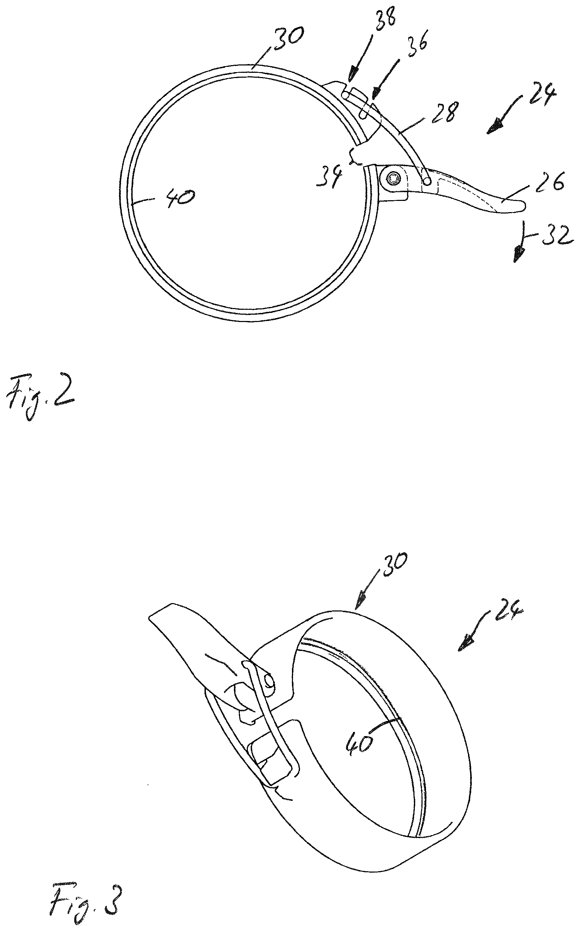

Der Spannring 24 ist auf das in Fig. 1 untere Ende des ersten Rohrstücks 12 aufgeschoben und über einen Abschnitt seines Umfangs, beispielsweise über 30 % seines Umfangs, mit dem Außenumfang des ersten Rohrstücks 12 verklebt. Im Bereich des übrigen Umfangs kann die Innenseite des Spannrings 24 aber auf dem Außenumfang des ersten Rohrstücks 12 gleiten. Der Spannring 24 weist eine schwenkbar an einem ersten Abschnitt des Spannrings 24 angelenkte Schnalle 26 auf, die wiederum mit einem Spannbügel 28 gelenkig verbunden ist. Der Spannbügel 28 kann in eine schlitzartige Ausnehmung an einem zweiten Abschnitt des Spannrings 24 eingehängt werden, siehe auch Fig. 2 und Fig. 3. Durch Umlegen der Schnalle 26, ausgehend von der in Fig. 1 und Fig. 2 dargestellten Stellung in eine gespannte, nicht dargestellte Stellung, in der die Schnalle 26 annähernd parallel zum Grundkörper 30 des Spannrings 24 liegt, kann ein Innenumfang des Spannrings 24 verringert werden.

Anhand der Fig. 2 ist zu erkennen, dass durch Einklappen der Schnalle 26 in Richtung des Pfeils 32 bis in eine Stellung, in der die Schnalle 26 am Außenumfang des Grundkörpers 30 anliegt, der Innenumfang des Spannrings um etwas weniger als eine Länge 34 verringert werden kann. Diese Länge 34 entspricht in der Darstellung der Fig. 2 dem Abstand der beiden Enden des Grundkörpers 30.

Indem also die Schnalle 26 ausgehend von der in Fig. 1 dargestellten Stellung eingeklappt wird, kann der Innenumfang des Spannrings 24 verringert werden und es kann eine Spannkraft auf den Außenumfang am ersten, in Fig. 1 unteren Ende des ersten Rohrstücks 12 ausgeübt werden. Dadurch verringert sich der Innendurchmesser des ersten Rohrstücks 12 am unteren Ende. Dies führt letztendlich dazu, dass das zweite Rohrstück 14 in dem ersten Rohrstück 12 festgeklemmt wird. Auch wenn nun das Griffstück 22 in Fig. 1 nach unten gedrückt wird, führt dies nicht dazu, dass das zweite Rohrstück 14 in das erste Rohrstück 12 weiter hineinrutscht als in Fig. 1 mittels gestrichelter Linien angedeutet ist.

Wird hingegen die Schnalle 25 in die in Fig. 1 und Fig. 2 dargestellte geöffnete Stellung gebracht, vergrößert sich der Innenumfang des Spannrings 24 und das zweite Rohrstück 14 kann dann leichtzügig und von Hand in das erste Rohrstück 12 eingeschoben werden.

Der zweite Spannring 25 ist identisch zum ersten Spannring 24 aufgebaut und am in Fig. 1 unteren Ende des zweiten Rohrstücks 14 befestigt, indem der Grundkörper 30 des Spannrings über etwa 30 % seines Umfangs mit dem Außenumfang des unteren Endes des zweiten Rohrstücks 14 verklebt ist.

Um den Grundkörper 30 des Spannrings 26 auf den gegenüber dem ersten Rohrstück 12 geringeren Außendurchmesser des zweiten Rohrstücks 14 zu bringen, wird der Spannbügel 28, siehe auch Fig. 2, in eine zweite schlitzförmige Ausnehmung 38 am Grundkörper des Spannrings 30 eingehängt, wie dies in Fig. 2 dargestellt ist.

Wird der Spannbügel 28 hingegen in die erste schlitzförmige Ausnehmung 36 eingehängt, siehe Fig. 2, wird der Innenumfang des Grundkörpers 30 weniger stark verringert.

Um das zweite Rohrstück 14 im ersten Rohrstück 12 festzuklemmen, wird infolgedessen der Spannbügel 28 des Spannrings 24 in die erste schlitzförmige Ausnehmung 36 eingehängt und die Schnalle 26 dann entlang des Pfeils 32 nach unten bewegt, bis der Totpunkt des Gelenks aus Schnalle 26 und Spannbügel 28 überschritten ist und die Schnalle am Außenumfang des Grundkörpers 30 anliegt. Um das dritte Rohrstück 16 im zweiten Rohrstück 14 festzuklemmen, wird der Spannbügel 28 des zweiten Spannrings 25 in die zweite schlitzförmige Ausnehmung 38, siehe Fig. 2, am Grundkörper 30 eingehängt und dann die Schnalle 26 entlang des Pfeils 32 nach unten bewegt, bis die Schnalle 26 am Außenumfang des Grundkörpers 30 anliegt. In dieser gespannten Stellung ist, wie ausgeführt wurde, ein Totpunkt des Gelenks aus Spannbügel 28 und Schnalle 26 überschritten und die Schnalle 26 bleibt selbsttätig in der am Außenumfang des Grundkörpers 30 anliegenden Stellung.

Um die Festklemmung des dritten Rohrstücks 16 im zweiten Rohrstück 14 bzw. des zweiten Rohrstücks 14 im ersten Rohrstück 12 wieder zu lösen, muss lediglich die Schnalle 26 an den beiden Spannringen 24, 25 wieder in die in Fig. 1 und Fig. 2 dargestellte Stellung gebracht werden. Die Rohrstücke 12, 14, 16 lassen sich dann ineinander einschieben, bis eine vollständig zusammengeschobene Transportstellung erreicht ist. In dieser vollständig eingeschobenen Transportstellung liegt eine Oberkante der Rückhaltevorrichtung 20 an einer Unterkante des zweiten Spannrings 25 an und eine Oberkante des zweiten Spannrings 25 liegt an einer Unterkante des ersten Spannrings 24 an. Ist diese vollständig zusammengeschobene Transportstellung erreicht, können die Schnallen 26 wieder in die gespannte und am Außenumfang des Rohrkörpers 30 anliegende Position gebracht werden, um das Sammelrohr 10 in der vollständig zusammengeschobenen Transportstellung zu fixieren.

In der vollständig ausgezogenen Arbeitsstellung der Fig. 1 weist das Sammelrohr 10 beispielsweise eine Länge von etwa einem Meter auf. Die Rohrstücke 12, 14, 16 weisen jeweils eine Länge von beispielsweise etwa 35 cm bis 40 cm auf.

Fig. 3 zeigt den Spannring 24 in einer Ansicht von schräg oben. In dieser Ansicht ist zu erkennen, dass der Innenumfang des Grundkörpers 30 einen umlaufenden Absatz 40 aufweist. Der Spannring 24 kann infolgedessen einfach auf ein Ende des ersten Rohrstücks 12 bzw. auf ein Ende des zweiten Rohrstücks 14 aufgeschoben werden, bis eine Stirnseite des jeweiligen Rohrstücks 12, 14 an dem Absatz 40 anschlägt. In dieser Position ist der Spannring 24 dann korrekt am Rohrstück 12 montiert und kann dann beispielsweise über einen Abschnitt der Länge seines Innenumfangs mit dem Außenumfang des Rohrstücks 12 verklebt werden. Eine andere Befestigung des Spannrings 24 an dem Rohrstück 12 ist im Rahmen der Erfindung selbstverständlich ebenfalls möglich, beispielsweise durch einfaches Verklemmen, durch Verschweißen oder mittels Nieten oder Schrauben.

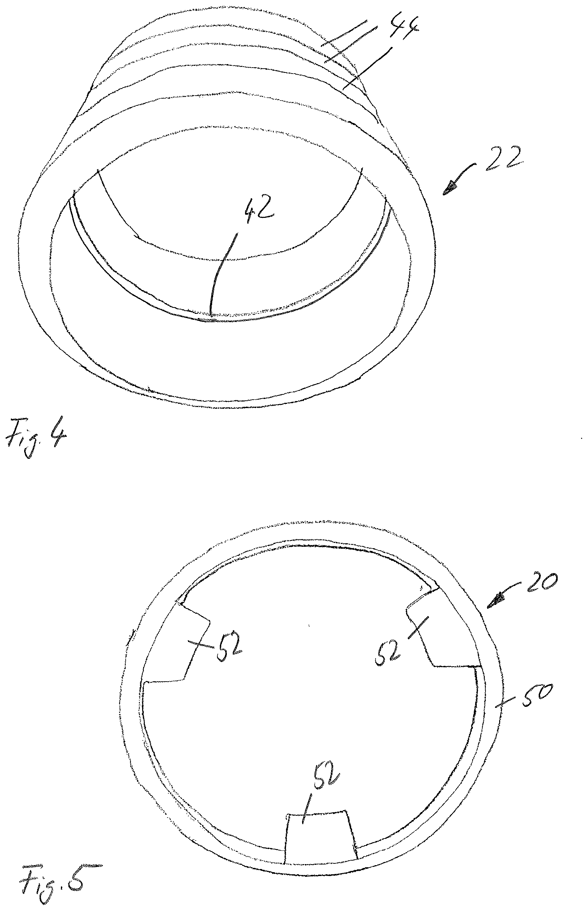

Fig. 4 zeigt den Griffabschnitt 22 des Sammelrohrs 10 der Fig. 1 in einer Ansicht von schräg oben. Es ist, wie auch in Fig. 1 gestrichelt angedeutet ist, zu erkennen, dass der Griffabschnitt 22 an seinem Innenumfang einen Absatz 42 aufweist. Zum Befestigen des Griffabschnitts 22 an dem ersten Rohrstück 12 muss das erste Rohrstück 12 lediglich in den Griffabschnitt 22 gesteckt werden, bis die obere Stirnseite des ersten Rohrstücks 12 an dem Absatz 42 anschlägt. In dieser Position kann dann der Außenumfang des ersten Rohrstücks 12 mit dem Innenumfang des Griffabschnitts 22 verbunden werden, beispielsweise durch Verkleben.

Der Griffabschnitt 22 weist, siehe Fig. 1 und Fig. 4, drei umlaufende Nuten 44 auf, die einen abgerundeten Nutgrund haben und mit anderen Worten als konkav ausgebildete flache Nuten ausgebildet sind. Diese Nuten laufen senkrecht zu einer Mittellängsachse des Sammelrohrs 10 um den Griffabschnitt 22 um und sind dafür vorgesehen, dass jeweils ein menschlicher Finger in eine der Nuten 44 eingreifen kann. Ein Bediener kann mit einer Hand den Griffabschnitt dadurch leicht erfassen und gut festhalten.

Fig. 5 zeigt eine Ansicht der Rückhaltevorrichtung 20 des Sammelrohrs 10 der Fig. 1. Die Rückhaltevorrichtung 20 wird auf das untere Ende des dritten Rohrstücks 16 aufgeschoben, bis das untere Ende des Rohrstücks 16 an einem Absatz am Innenumfang eines Grundkörpers 50 der Rückhaltevorrichtung 20 anschlägt. In dieser Position kann dann der Innenumfang des Grundkörpers 50 der Rückhaltevorrichtung 20 mit dem Außenumfang des unteren Endes des dritten Rohrstücks 16 verbunden werden, beispielsweise verklebt werden.

Die Rückhaltevorrichtung 20 weist drei um 120° voneinander beabstandete und in den Innenraum des Grundkörpers 50 hineinragende federnde Vorsprünge 52 auf. Die federnden Vorsprünge 52 sind beispielsweise einstückig mit dem Grundkörper 50 ausgebildet, beispielsweise aus einem elastischen Kunststoff. Die Rückhaltevorrichtung 20 kann wie der Griffabschnitt 22 und die Grundkörper 30 der Spannringe 24, 25 als Kunststoffspritzgussteil ausgebildet sein.

Die Vorsprünge 52 ragen, siehe auch Fig. 1, radial nach innen sowie schräg vom unteren Ende des Sammelrohrs 10 weg ab. Im Querschnitt, siehe Fig. 1, gesehen sind die federnden Vorsprünge keilförmig ausgebildet. Beim Aufsetzen der Rückhaltevorrichtung 20 am unteren Ende des Sammelrohrs 10 auf einen Tennisball 18 werden die federnden Vorsprünge 52 nach oben, in Richtung auf den Innenraum des Sammelrohrs 10 gedrückt. Die Rückhaltevorrichtung 20 wird durch Druck auf das Sammelrohr 10 nach unten, dann an dem Tennisball vorbei gedrückt, bis die in Fig. 1 dargestellte Stellung erreicht ist. In dieser Stellung federn die federnden Vorsprünge 52 wieder zurück in ihre Ausgangsstellung und halten den Tennisball 18 sicher im Innenraum des Sammelrohrs 10. Die federnden Vorsprünge 52 sind dabei so ausgebildet, dass Tennisbälle mit einem Durchmesser zwischen 62 mm und 75 mm aufgenommen werden können.

Anhand der Fig. 5 ist zu erkennen, dass die radial innenliegenden Kanten der federnden Vorsprünge 52 konkav gekrümmt sind und auf einer gemeinsamen Kreislinie liegen. Dadurch wird das Aufnehmen von Tennisbällen auch mit unterschiedlichem Radius erleichtert.

## Patentansprüche

1. Sammelrohr (10) für Tennisbälle (18) mit wenigstens zwei teleskopierbaren Rohrstücken (12, 14, 16), wobei ein erstes Rohrstück (12) einen Innendurchmesser aufweist, der im Wesentlichen einem Außendurchmesser des zweiten Rohrstücks (14) entspricht, so dass die beiden Rohrstücke (12, 14, 16) ineinander eingesteckt und relativ zueinander verschoben werden können, **gekennzeichnet durch** einen Spannring (24, 25), der im Bereich eines Endes des ersten Rohrstücks (12) angeordnet ist und das erste Rohrstück (12) umgibt, wobei der Spannring (24, 25) eine Schnalle (26) aufweist, die einerseits in einem ersten Abschnitt des Spannrings (24, 25) schwenkbar angelenkt ist und andererseits mit einem Spannbügel (28) verbunden ist, der an einem zweiten Abschnitt des Spannrings (24, 25) angreift, so dass der Spannring (24, 25) in einer ersten Stellung der Schnalle (26) einen ersten Innendurchmesser, und in einer zweiten Stellung der Schnalle (26) einen zweiten Innendurchmesser aufweist, der kleiner ist als der erste Innendurchmesser und dass der Spannring (24, 25) so ausgebildet und auf dem ersten Rohrstück (12) angeordnet ist, dass in der ersten Stellung der Schnalle (26) das zweite Rohrstück(14) in dem ersten Rohrstück (12) verschiebbar ist und in der zweiten Stellung der Schnalle (26) das zweite Rohrstück (14) in dem ersten Rohrstück (12) festgeklemmt ist.

2. Sammelrohr nach Anspruch 1, **dadurch gekennzeichnet, dass** der Spannring (24, 25) als offener Ring ausgebildet ist, dass die Schnalle (26) im Bereich eines ersten Endes des Spannrings (24, 25) schwenkbar angelenkt ist und der Spannbügel (28) im Bereich eines zweiten Endes des Spannrings (24, 25) angreift.

3. Sammelrohr nach Anspruch 1 oder 2, **dadurch gekennzeichnet, dass** der Spannbügel (28) in eine Ausnehmung (36, 38) oder an einem Vorsprung am Spannring (24, 25) eingreift.

4. Sammelrohr nach Anspruch 4, **dadurch gekennzeichnet, dass** der Spannring (24, 25) wenigstens zwei in Umfangsrichtung voneinander beabstandete Ausnehmungen (36, 38) oder Vorsprünge zum Eingreifen des Spannbügels (28) aufweist.

5. Sammelrohr nach wenigstens einem der vorstehenden Ansprüche, **dadurch gekennzeichnet, dass** der Spannring (24, 25) mit einem Ende des ersten Rohrstücks (12) verbunden ist.

6. Sammelrohr nach Anspruch 5, **dadurch gekennzeichnet, dass** der Spannring (24, 25) mit einem Abschnitt seines Innenumfangs mit einem Abschnitt des Außenumfangs des ersten Rohrstücks (12) verklebt ist.

7. Sammelrohr nach wenigstens einem der vorstehenden Ansprüche, **dadurch gekennzeichnet, dass** der Spannring (24, 25) am Innenumfang einen Absatz (40) aufweist, an dem eine Stirnseite des ersten Rohrstücks (12) anliegt.

8. Sammelrohr nach wenigstens einem der vorstehenden Ansprüche, **dadurch gekennzeichnet, dass** ein drittes Rohrstück (16) vorgesehen ist, wobei das zweite Rohrstück (14) einen Innendurchmesser aufweist, der im Wesentlichen einem Außendurchmesser des dritten Rohrstücks (16) entspricht, so dass das zweite Rohrstück (14) und das dritte Rohrstück (16) ineinander eingesteckt und relativ zueinander verschoben werden können, wobei durch ein zweiter Spannring (25) vorgesehen ist, der im Bereich eines Endes des zweiten Rohrstücks (14) angeordnet ist und das zweite Rohrstück (14) umgibt, wobei der zweite Spannring (25) eine Schnalle (26) aufweist, die einerseits in einem ersten Abschnitt des Spannrings (25) schwenkbar angelenkt ist und andererseits mit einem Spannbügel (28) verbunden ist, der an einem zweiten Abschnitt des Spannrings (25) angreift, so dass der Spannring (25) in einer ersten Stellung der Schnalle (26) einen ersten Innendurchmesser und in einer zweiten Stellung der Schnalle (26) einen zweiten Innendurchmesser aufweist, der kleiner ist als der erste Innendurchmesser und dass der Spannring (25) so ausgebildet und auf dem zweiten Rohrstück (14) angeordnet ist, dass in der ersten Stellung der Schnalle (26) das dritte Rohrstück (16) in dem zweiten Rohrstück (14) verschiebbar ist und in der zweiten Stellung der Schnalle (26) das dritte Rohrstück(16) in dem zweiten Rohrstück (14) festgeklemmt ist.

9. Sammelrohr nach Anspruch 8, **dadurch gekennzeichnet, dass** die beiden Spannringe (24, 25) identisch ausgebildet sind, wobei die Schnalle (26) jeweils im Bereich eines ersten Endes des Spannrings (24, 25) schwenkbar angelenkt ist, wobei der Spannbügel (28) jeweils im Bereich eines zweiten Endes des Spannrings (24, 25) angreift, wobei der Spannbügel (28) in eine Ausnehmung (36, 38) oder einem Vorsprung am Spannring (24, 25) eingreift, wobei der Spannring (24, 25) wenigstens zwei in Umfangsrichtung voneinander beabstandete Ausnehmungen (36, 38) oder Vorsprünge zum Eingreifen des Spannbügels (28) aufweist, wobei der Spannbügel (28) zum Klemmen des zweiten Rohrstücks (14) in dem ersten Rohrstück (12) in eine erste Ausnehmung (36) oder einem ersten Vorsprung eingreift und wobei der Spannbügel (28) zum Klemmen des dritten Rohrstücks (16) in dem zweiten Rohrstück (14) in eine zweite Ausnehmung (38) oder einem zweiten Vorsprung eingreift.

10. Sammelrohr nach wenigstens einem der vorstehenden Ansprüche, **dadurch gekennzeichnet, dass** die Rohrstücke (12, 14, 16) als durchgehend glatte, zylindrische Rohrstücke mit senkrecht zu ihrer Mittellängsachse angeordneten Stirnflächen ausgebildet sind.

11. Sammelrohr nach wenigstens einem der vorstehenden Ansprüche, **dadurch gekennzeichnet, dass** an einem Ende eines der Rohrstücke (16) eine Rückhaltevorrichtung (20) für Tennisbälle (18) angeordnet ist, die mehrere, insbesondere drei, in Richtung auf eine Mittellängsachse des Rohrstücks vorragende federnde Vorsprünge (52) aufweist.

12. Sammelrohr nach Anspruch 11, **dadurch gekennzeichnet, dass** die Vorsprünge in Richtung von dem offenen Ende des Rohrstücks (16) weg schräg angeordnet sind.

13. Sammelrohr nach Anspruch 11 oder 12, **dadurch gekennzeichnet, dass** die Rückhaltevorrichtung (20) einen ringförmigen Grundkörper (50) aufweist, der auf ein Ende des Rohrstücks (16) aufgeschoben ist.

14. Sammelrohr nach Anspruch 11, 12 oder 13, **dadurch gekennzeichnet, dass** radial innenliegende Kanten der Vorsprünge konkav gekrümmt sind und auf einer gemeinsamen Kreislinie liegen.

15. Sammelrohr nach wenigstens einem der vorstehenden Ansprüche, **dadurch gekennzeichnet, dass** an einem Ende eines der Rohrstücke (12) eine Griffvorrichtung (22) vorgesehen ist, die einen ringförmigen Grundkörper aufweist und auf ein Ende des Rohrstücks (12) aufgeschoben ist.
